# EUROPÄISCHE PATENTSCHRIFT

(11) **EP 1 038 744 B1**
(45) Veröffentlichungstag und Bekanntmachung des Hinweises auf die Patenterteilung: **04.12.2002**
(21) Anmeldenummer: 99105088.1
(22) Anmeldetag: 24.03.1999
(51) Int. Cl.: B60T 8/24, B60T 7/20

(54) **Schlingerdämpfer**
Sway damper
Amortisseur de louvoiement

(30) Priorität: 24.03.1999 DE 19913342
(43) Veröffentlichungstag der Anmeldung: 27.09.2000
(73) Patentinhaber: Gubernath, Johannes, DIPL-ING. (FH), 93142 Maxhütte-Haidhof (DE)
(72) Erfinder: Gubernath, Johannes, DIPL-ING. (FH), 93142 Maxhütte-Haidhof (DE)

(56) Entgegenhaltungen:
- EP-A- 0 435 086
- DE-A- 19 708 144
- DE-C- 3 831 492
- GB-A- 1 417 601
- US-A- 3 894 773
- US-A- 3 909 044
- US-A- 3 948 544
- US-A- 3 993 362

## Beschreibung

Die Erfindung betrifft eine Einrichtung zum Dämpfen von Schlingerbewegungen für mindestens ein von einem Zugfahrzeug gezogenes Anhängerfahrzeug entsprechend dem Oberbegriff des Anspruchs 1.

Eine derartige Einrichtung ist aus der DE 19708144 A1 bekannt.
Bei diesem bekannten Schlingerdämpfer erfolgt die Dämpfung der Pendelbewegungen im Prinzip, durch Einbau eines Reglers, der die Anhängerbremsen betätigt und dem der Pendelschwingung zugrundeliegenden Drehmoment, ein Zusatzdrehmoment entgegenwirken läßt und so dieses vermeidet oder doch zumindest vermindert. Dabei wird eine seitlich auf den Kupplungspunkt ausgeübte Kraft gemessen, die je nach ihrer Größe und Richtung, ein zugeordnetes Rad so abbremst, daß dieser seitlichen Kraft entgegengewirkt wird. Aus der Figur und Beschreibung folgt, daß bei maximaler Auslenkung des schlingernden Anhängers um den Momentanpol der Bremseneingriff an dem Rad, das der Neutralstellung am nächsten ist (innen), maximal wird. Die Erfassung der Querkraft kann durch Kraftmeßdosen, Wegmessung oder Winkelmessung an der Deichsel, Abweichung der Drehgeschwindigkeit der Deichselräder untereinander, Ableitung der Kraft aus der Winkelgeschwindigkeit des Drehwinkels der Deichsel, Wegaufnehmer bzw. Geschwindigkeitsaufnehmer erfolgen. Die Aktorik wird durch eine ABS-Pumpe, die durch den Regler eingeschaltet wird oder pneumatische oder hydraulische Speichereinrichtungen versorgt. Dabei findet keine Unterscheidung zwischen einer Deichselquerkraft, die durch eine Kurvenfahrt oder Richtungsänderung des Zugfahrzeug oder durch Schlingerbewegungen hervorgerufen wird, statt.

Aus der GB 1417601 ist es bekannt, mit Hilfe einer Zeitverschiebung bzw. Totzeit, des Bremslösevorgangs und einer erheblich kleineren Startverzögerung der Betätigung der Bremsen von mindestens einem Rad des Anhängers die Schlingerbewegung zu dämpfen. Dabei wird die Winkelbeschleunigung des Anhängers über eine relative Verdrehung, einer in einer transparenten Flüssigkeit drehbar gelagerten Scheibe, die neben der lichtundurchlässigen Mittelstellung zwei transparente Fenster besitzt, gemessen. Wird der Anhänger mit dem Sensorgehäuse soweit beschleunigt, daß die Auslenkung der Scheibe um 3,5° den Strahlengang einer Lichtschranke nicht mehr unterbricht, wird ein Kondensator C1 über einen Widerstand R5 entladen. Dies führt zur Betätigung der Bremsen. Damit diese Betätigung nicht nur während des kurzen Moments des ununterbrochenen Durchganges des Lichtstrahles durch die Scheibe erfolgt, wird nun der Kondensator C1 über einen wesentlich größeren Widerstand R6 so langsam aufgeladen, daß sich daraus eine Abfallverzögerung ("on" time delay) von 0,25 bis 0,5 s der Bremsen ergibt, in der der Anhänger die Neutralstellung bezüglich des Zugfahrzeugs erreichen kann. Die Bremsen werden dabei entweder voll gelöst oder voll angezogen, wobei die Blockiergrenze berücksichtigt wird. Bei einer Regelung einzelner Räder wird das Rad in Abhängigkeit der Schlingerrichtung gebremst.

In dem US Patent US 3,948,544 vom 6. April 1976 wird ein Schlingerdämpfer beschrieben, der in Abhängigkeit der Größe und Ausrichtung der Querkräfte an der Anhängerkupplung die Bremsen der jeweiligen Seite betätigt.
Die automatische Betätigung der Anhängerbremsen erfolgt über ein Reaktionsrad, welches die Richtung und Amplitude der Kraft ermittelt, die am Anhänger wirkt. Über Gestänge zwischen Reaktionsrad und Kolben, die sich in Zylindern verschieben lassen, überträgt ein Hydrauliksystem die Kraft auf die Bremsen der zugeordneten Seite des Anhängers. Durch das Betätigen der Anhängerbremsen, durch das Verzögern des Zugfahrzeuges, wird im Fall des Schlingerns die Bremskraft an einem Rad erhöht und am anderen verringert. Der Apparat bewirkt dabei eine Bremswirkung am Rad an der rechten Seite des Anhängers , wenn der Anhänger nach rechts auslenkt und die Bremskraft des Rades bewirkt an der linken Seite des Anhängers, wenn der Anhänger nach links auslenkt. Im Allgemeinen folgt dabei der zeitliche Verlauf, der seitlichen Kraft auf die Anhängerkupplung, dem Verlauf des Knickwinkels zwischen den beiden Längssachsen, der aneinander gekuppelten Fahrzeugen, das heißt bei maximaler Auslenkung des Knickwinkels, hat auch die Verzögerung des entsprechenden Rad sein Maximum.

Bekannt ist zudem das US Patent US 3,909,044 von 30. Sept. 1975, in welchem ein Apparat beschrieben wird, der das Einknicken von Sattelzügen verhindern soll. Eine durch einen Motor in Drehung versetzte Schwungscheibe, detektiert schnelle Seitwärtsbewegungen zwischen Zugfahrzeug und Anhänger. Durch den Detektor ausgelöst, versuchen unterschiedliche Aktoren das Schwenken zwischen Zugfahrzeug und Anhänger zu erschweren. Zu diesen, das Schwenken zwischen Zugfahrzeug und Anhänger erschwerenden Mitteln gehören, im Bereich der Sattelkupplung über Spulen aktivierte Reibbeläge oder relativ große Elektromagnete oder pneumatisch betätige Schwingungsdämpfer. Ein Abbremsen der Rädern oder ein quantitatives Erfassen der Drehgeschwindigkeit ist in dem US Patent 3,909,044 nicht vorgesehen.

Es ist zudem das Verfahren zur Stabilitätskontrolle bekannt, wie es in dem Patent DE 3831492 C1 beschrieben wird. In dem Verfahren werden Fahrgeschwindigkeit, Lenkradwinkel und Knickwinkel gemessen. Der Quotient aus dem Effektivwert des Knickwinkels zu dem Effektivwert des Lenkradwinkels wird dabei mit einem Grenzwert und der dazugehörigen Fahrgeschwindigkeit verglichen und gespeichert. Aus den Wertepaaren Dämpfung-Fahrgeschwindigkeit kann die kritische Geschwindigkeit, bei der die Dämpfung gleich Null ist, ermittelt werden. Bei Erreichen einer Grenzgeschwindigkeit, die etwa 85%..92% der kritischen Geschwindigkeit beträgt, wird ein Warnsignal erzeugt. Ein aktiver Eingriff auf das fahrdynamische Verhalten des Gespanns unterbleibt.

Demgegenüber liegt der vorliegenden Anmeldung die Aufgabe zugrunde, eine einfach aufgebaute Einrichtung zum Dämpfen von Schlingerbewegungen eines Anhängerfahrzeuges weiter zu verbessern.

Diese Aufgabe wird durch die Merkmale des Hauptanspruchs gelöst.

Vorteilhafte Ausgestaltungen dazu sind in den Unteransprüchen angegeben.

Durch die Anpassung des Regelverhaltens an die Fahrgeschwindigkeit entsprechend dem Anspruch 2 sind die Dämpfungseigenschaften des Anhängers nicht mehr so stark von der Fahrgeschwindigkeit und der Knickwinkelamplitude der Störung, sondern hauptsächlich von dem Übertragungsverhalten (Schräglaufsteifigkeit, Seitensteifigkeit, dynamischen Nachlauf) der Reifen abhängig. Sowohl große wie auch kleine Schwingungen des Anhängers können durch die Erfindung gedämpft werden. Es bleibt auch bei höheren Geschwindigkeiten immer eine Grunddämpfung erhalten, somit können sich von außen angeregte Schwingungen nicht verstärken. Die Funktion der Auflaufbremse wird durch den Einbau der Erfindung nicht beeinträchtigt, bei gleichzeitigem Bremsen des Zugfahrzeugs, während der Anhänger schlingert, wirken die errechneten Bremskräfte zusätzlich, je nach Bewegungsrichtung, Winkelgeschwindigkeit und Seite erhöhend oder verringernd.

Die Erfindung wird im folgenden anhand der beiliegenden Zeichnungen an einer Ausfühungsform näher erläutert.
Es zeigen :

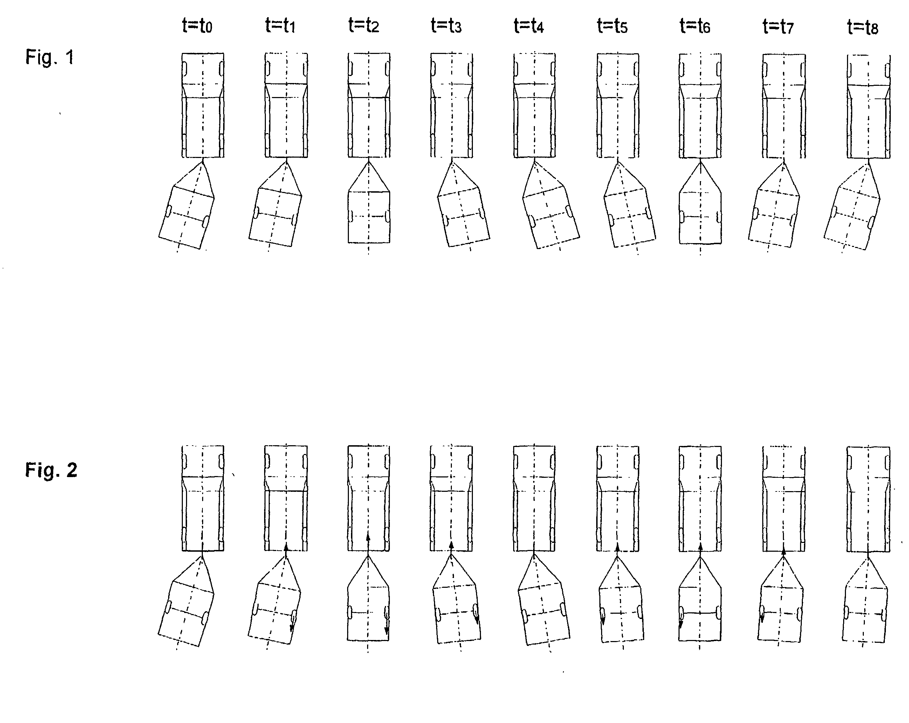

Fig. 1 den Einfluß der Dämpfung auf den zeitlichen Ablauf von Pendelschwingungen, ohne Dämpfung.
Fig. 2 den Einfluß der Dämpfung auf den zeitlichen Ablauf von Pendelschwingungen, mit Dämpfung, durch Anbremsen der Räder, wobei die Größe der Bremskraft der einzelnen Räder zu bestimmten Zeitpunkten dargestellt wird.
Fig. 3 Unteransicht eines auflaufgebremsten Anhängers mit Linearantrieb.
Fig. 4 Unteransicht eines auflaufgebremsten Anhängers mit Schwenkantrieb.

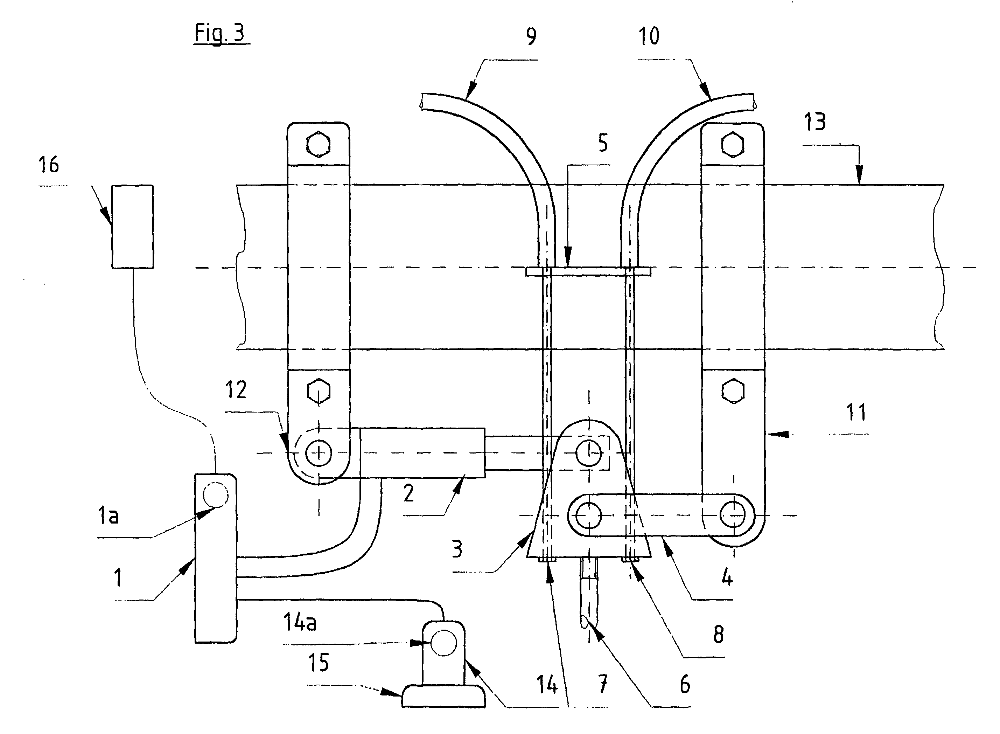

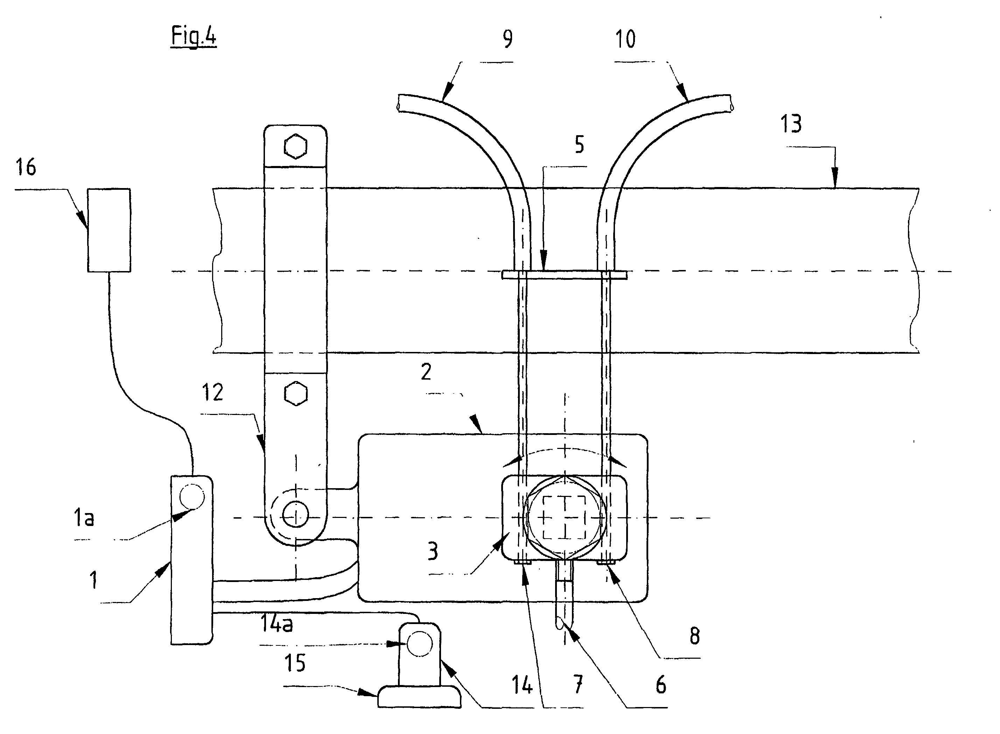

Bezugszeichenliste zu Fig. 3 und Fig. 4 befindet sich am Ende der Beschreibung.

Durch Auswerten der Information des Sensor 1 a, 14 a und des Fahrgeschwindigkeitsgebers 16 steuert der Regler 1 den Aktor 2 an. Das Mittelstück 3, welches mit der Stange 4, dem Aktor 2 und der Zugstange 6 gelenkig verbunden ist, überträgt eine lineare oder rotatorische Bewegung des Aktors 2 unter der Mitwirkung der Verbindungsmittel zur Auflaufbremse (Zugstange) 6 und der Stange 4 auf die Seilzüge 7 und 8. Der Halter 11, der mit der Stange 4 gelenkig verbunden und der Halter 12, der mit dem Aktor 2 gelenkig verbunden ist, sind an dem Achsmittelteil des Anhängers 13, zur einfacheren Nachrüstung lösbar, befestigt. Die Anordnung der Gelenkpunkte, z.B. des Aktors am Mittelstück, kann unter Umständen in gewissen Grenzen verändert, z.B. seitlich verschoben, werden. Ebenso ist es möglich statt dem dargestellten Aktor einen oder mehrere andere, die linear oder rotatorisch oder einer Kombination aus beiden, wirken einzusetzen.

Wie oben schon erwähnt ist die Dämpfungeigenschaft des Systems zu erhöhen. Dazu ist es notwendig Informationen über den Schwingungszustand des System zu erhalten. Mögliche Informationsquellen sind Sensoren, die den Knickwinkel zwischen den beiden Längsachsen differenzieren, oder die Winkelgeschwindigkeit des Anhängers messen, oder eine Winkelbeschleunigung oder für kleine Winkel eine seitliche Beschleunigung in Schwerpunktnähe des Anhängers integrieren.
Dieser Information, unter Berücksichtigung des Fahrverhaltens und der Fahrgeschwindigkeit entsprechend, muß nun ein, zeitlich in seiner Größe veränderliches, Moment auf den Anhänger wirken, das dem rückstellenden Moment, das durch die seitliche Auslenkung des Anhänger entsteht, phasenverschoben der Auslenkung vorauseilend wirkt. Das Rückstellmoment ist, bei kleinen Auslenkungen von ca. 2 ....6 Grad, der Auslenkung des Anhängers und/oder dem Schräglaufwinkel der Reifen und/oder Bremsmoment des Anhänger ohne Schlingerdämpfung proportional.
Dabei bedeutet der Fahrgeschwindigkeit entsprechend, daß sich der Einfluß der Regelung an die Fahrgeschwindigkeit anpaßt. Bei Geschwindigkeit bis 10 m/s ist die Gefahr des Schlingerns bei normal beladen Anhängern gering. In diesen Fall kann die Wirkung der Aktorik reduziert werden oder ganz abgeschaltet werden. Dieses Abschalten der Aktorik kann manuell oder automatisch durch einen Fahrgeschwindigkeitsgeber oder durch mindestens einen Drehzahlgeber, der die Drehzahl von mindestens einem Rad des Anhängers oder Gespanns mißt, erfolgen, wobei der Regler, mit einer zeitlichen Verzögerung 2 bis 8 s, nachdem der Wert der Ruhelage der Aktorik als Sollwert an den Regler übermittelt wurde, die Aktorik sperrt. Ein Verschieben des Momentanpols aus den Bewegungsrichtungen des Zugfahrzeugs und dessen Anhänger soll bei extremen Abbremsmanövern dadurch erschwert werden.

Als Drehzahlgeber können zum Beispiel Hallsensoren, die die Drehung des Rades oder der Bremsscheibe oder Bremstrommel oder der Kugellager erfassen, oder Piezoelemente, die mit einer kleinen Masse versehen sind, und die durch die Drehung des Rades eine Spannungsumkehr am Piezoelement erfahren, hervorgerufen durch die Richtungsumkehr der Kraftwirkung auf die Masse durch die Erdbeschleunigung, und diese dann drahtlos an den Regler übermitteln, eingebaut werden.

Eine Reduzierung der Wirkung der Aktorik kann, durch eine Reduzierung des Sensorsignals, oder durch ein Reduzierung der Verstärkung des Sensorsignals, der Drehgeschwindigkeit des Anhängers um die Hochachse, erreicht werden. Durch Filterung der Information über die Drehgeschwindigkeit des Anhängers kann der Bereich des Übertragungsverhaltens von 0,2 Hz bis 3 Hz angehoben und bei Bereichen unter 10 Hz abgesenkt werden. Eine Verbesserung der Informationsverarbeitung ist durch eine Filterung der information über die Drehgeschwindigkeit des Zugfahrzeuges durch einen Tiefpaß oder Hochpaß oder einer Kombination beider Arten möglich, um störende Meßsignale zu unterdrücken oder die Dynamik des verwendeten Sensors anzupassen.

Ebenso ist es möglich, diese Reduzierung durch einen Sensor, der Informationen über die Drehgeschwindigkeit des Zugfahrzeugs um die Hochachse an der Regler liefert, zu erreichen, indem man die Drehgeschwindigkeit des Zugfahrzeuges unter der Berücksichtigung des Massenträgheitsmoment des Zugfahrzeugs, des
Massenträgheitsmoment des Anhängers, des Abstandes des Kupplungspunktes von dem Schwerpunkt des Zugfahrzeugs und des Anhängers, des Abstandes der Achsen vom Schwerpunkt des Zugfahrzeugs und des Anhängers, der Schräglaufsteifigkeit der Reifen und der Fahrgeschwindigkeit als Sollwinkelgeschwindigkeit des Anhängers zu berechnen.
Durchfährt das Zugfahrzeug mit dem Anhänger mit höherer Geschwindigkeit (v ca. 20...35 m/s) eine Kurve (R ca. 200....400 m), so dreht sich auch der Anhänger mit einer bestimmten Winkelgeschwindigkeit v/R. Bei kleinen seitlichen Auslenkungen (ca. 0,1 m, 1,5 Grad), die sich bei Überschreiten der kritischen Geschwindigkeit rasch vergrößern (D ca. -0,05), liegt diese Winkelgeschwindigkeit in einem Bereich, in dem die Aktorik des Anhängers mindestens ein Rad der entsprechenden Seite des Anhängers verzögert.

Berücksichtigt der Regler, die Information der Sollwinkelgeschwindigkeit in einer derartigen Kurvenfahrt, so läßt sich eine Unterscheidung zwischen einer Drehbewegung, die durch das Schlingern, und einer, die durch das Durchfahren einer Kurve hervorgerufen wird, treffen. Man kann auch noch zusätzlich die Information der seitlichen Beschleunigung des Gespanns ermitteln und bei gleichmäßigem Verlauf davon ausgehen, daß eine Kurve durchfahren wird und bei Auftreten einer Periodizität, deren Ausmaß vielleicht sogar noch ansteigt, der Anhänger schlingert. Ein Signal der Winkelgeschwindigkeit des Anhängers, welches den Schlingerbewegungen eindeutig zugeordnet werden kann, kann eine größere und besser koordinierte Abbremsung der Räder hervorrufen, als ein Signal, das durch die Richtungsänderungsgeschwindigkeit des Gespanns überlagert wird.
Der Sensor zur Ermittlung der Winkelgeschwindigkeit des Zugfahrzeugs um die Hochachse kann in oder auf einem Gehäuse eines Steckers, der die Energieversorgung oder Informationsübertragung zwischen Zugfahrzeug und Anhänger herstellt, oder am Zugfahrzeug selbst befestigt werden.
Entsprechend einer voreingestellten Sollwinkelgeschwindigkeit oder günstiger, der augenblicklichen Sollwinkelgeschwindigkeit und der Istwinkelgeschwindigkeit des Anhängers wird die Aktorik, unter Berücksichtigung der Spurweite des Anhängers, angesteuert, die ein auf beiden Seiten unterschiedliches, zeitlich veränderliches Abbremsen der Anhängerräder bewirkt. Dabei wird mindestens ein Rad der Seite des Anhängersegments angesteuert, welche sich in Richtung der seitlichen Bewegungsrichtung des Anhängersegmentes befindet. Dabei ist die Phasenvoreilung der Winkelgeschwindigkeit gegenüber dem Relativwinkel zwischen den Fahrzeuglängsachsen zu beachten. Damit der Geschwindigkeitsverlust nicht zu groß wird oder die Abbremsung durch niedrige Reibwerte zwischen Reifen und Fahrbahn begrenzt ist, kann die Zeit in der große Störungen gedämpft werden, bis auf ca. 10 Periodendauem erhöht werden. Das Abbremsen kann über elektronisch gesteuerte Aktoren, die hydraulisch oder pneumatisch oder rheoelektrisch oder elektromechanisch Kräfte auf die Anhängerbremse übertragen, und bei konventionellen Anhängern meist schon vorhanden sind, erfolgen. Besitzt der Anhänger bereits eine Regelanlage, die die Betätigung der Anhängerbremsen koordiniert, wird diese zusätzlich mit den Informationen über die zu betätigenden Bremsen versorgt.
Bei Anhängern, die nur durch die Massenträgheit des Anhängers mechanisch auflaufgebremst sind, bietet sich mindestens ein Aktor an, der z.B. über einen Elektromotor und eine Übersetzung auf die Übertragungsmittel der Bremskraft, meist
Seilzüge oder Bremsgestänge, oder unmittelbar eine zusätzliche Kraft auf die Bremsen wirken läßt, an.
Die Information über die durch die Aktorik hervorgerufene Bremskraft, die an den Räder wirkt, wird an den Regler zurückgemeldet, dabei wird, auch mittelbar, der Betätigungsweg der Bremshebel sensorisch über ein Wegmeßsystem,oder Drücke des Bremssystems oder die Betätigungskraft der Bremsen, oder den Strom oder Spannung durch den Aktor gemessen. Sollte eine intermittierende Ansteuerung oder Kraftwirkung der Bremsen der jeweiligen Seite zur Anwendung kommen, so wird das Pulsbreitenverhältnis, ober die Frequenz der Impulse oder der Effektivwert der Betätigungskraft oder Bremskraft oder der Bremsdruck vom Regler moduliert.

Bei auflaufgebremsten Anhängern, bei denen die Kraftübertragung hydraulisch erfolgt, muß die Aktorik den Druck der jeweiligen Anhängerseite im Hydrauliksystem anpassen, oder rheoelektrisch oder auf mechanische Übertragungsmittel, oder zusätzlich elektromechanisch oder pneumatisch wirken. Diese elektromechanische Wirkung kann durch, eine elektromotorische Drehbewegung und eine mechanische Übersetzung, die diese Drehbewegung in ein Kraftwirkung auf die Bremsscheibe oder Bremstrommel umsetzt, das Rad abbremsen, ähnlich einer Schwimmsattelbremse oder einer Servotrommelbremse. In rheoelektrischen Aktoren verändert sich das Fließverhalten von Flüssigkeit durch das Anlegen von Spannungen an die Flüssigkeit, durch Anlegen einer Druckversorgung können z.B. Kolbenbewegungen in einen Zylinder gesteuert werden.

Durch eine optische und/oder akustische Warneinrichtung informiert der Regler den Fahrer, daß aufgrund von erkannten Schlingerbewegungen des Anhängers oder der Anhängerkombination der Regler selbstständig stabilisierend eingreift. Sollten die Pausen zwischen denen, die Aktorik stark regulierend eingreift sich immer weiter verkürzen oder eine Mindestdauer unterschreiten, ändert sich das Warnsignal, welches dem Fahrer signalisiert die Fahrgeschwindigkeit zu reduzieren. Dies kann zum Beispiel durch den Wechsel der Frequenz der Signale oder/und den Wechsel von Impuls- und Dauersignal realisiert werden. Die Mindestdauer kann eingestellt werden oder sich mit dem Anstieg der Bremstemperatur oder mit der Verringerung der Pausen zwischen denen der Regler die Aktorik ansteuert, verkürzen.

Als Sensoren für die
Winkelgeschwindigkeit dienen beispielsweise verschiedene Arten von Kreiselsystemen, mechanische, faseroptische, gas rate sensor Kreiselsensoren, Drehratensensoren, (Stimmgabel, Piezoelektrische Vibrations Prismen oder Ringe, Halbkugeln, Zylinder, Coriolseffekt)und/oder durch Differenzbildung zwischen mehreren Beschleunigungsmessern unterschiedlicher Lage und deren Integration, oder durch Coriolisbeschleunigung und/oder andere Meßgeräte, die Informationen über die Drehgeschwindigkeit liefern. Eine weitere Möglichkeit ist die seitliche Auslenkung des Anhänger optisch, elektronisch, mechanisch, induktiv, kapazitiv, hydraulisch, pneumatisch zu messen und diese Information zu Differenzieren oder seitliche Beschleunigungen zu integrieren um dann Seitenführungskräfte und/oder den Rollwiderstand der Rädern entsprechend zu verändern.Die Fahrwiderstände der entsprechenden Seite müssen den Informationen über die derzeitige Winkelgeschwindigkeit des Anhängersegments, durch die Aktorik möglichst zeitnah folgen. Verzögerungen durch Berechnung der Bremskräfte, Ansteuerung der Aktorik und Wirkung der Kraft auf das Anhängersegment oder den Anhänger sind nur bis maximal 0,2..0,24 der Schwingungsdauer zulässig. Durch den Einbau von Meßinstrumenten in das Zugfahrzeug die Informationen über Drehgeschwindigkeit um die Hochachse und/oder die Seitenbeschleunigung und/oder den Lenkwinkel bereitstellen, kann ein Verreißen der Lenkung erkannt werden.

Die Erfindung kann sowohl bei einachsigen als auch bei mehrachsigen oder mehrgliederigen Fahrzeugkombinationen eingesetzt werden, wobei für jedes Segment der Fahrzeugkombination, die dem Zugfahrzeug folgt, eine Sensor-Aktoreinheit eingebaut ist, sollten Fahrversuche und gefundene Einstellparameter erweisen, daß es möglich ist, die Aktorik in einzelnen Segmenten zu sperren ohne, daß sich im Schlingerzustand aufklingende Tendenzen ergeben kann dieser Aktor ersetzt werden. Auf die Aktorik in dem letzten und ersten Anhängersegment sollte nicht verzichtet werden.

Ein Segment besteht aus mindestens einem Teil, welches die Seitenführungskräfte in Abhängigkeit der Auslenkung oder Schräglaufes überträgt und Verbindungsmittel zu dem vorausfahrenden Segment oder Zugfahrzeug besitzt, wie z.B. achsschenkel- oder drehschemelgelenkte Achsen mit den entsprechenden Deichsel oder Lenk- oder Starrachsen mit den dazugehörigen "Rahmen", bei mehrachsigen Anhänger, oder Sattelzug-, Zentralachs-, Einachs-, Tandemachsanhänger. Der Begriff Anhänger beinhaltet auch z.B. Arbeitsgeräte, Schrägaufzüge, fahrbare Leitern, Kräne, Flutlichtanlagen, mil. Geräte, Flugzeugtransporter... Setzt sich die Fahrzeugkombination aus mehr als 3 Segmenten zusammen, kann auch die Sollwinkelgeschwindigkeit für das Segment aus der Winkelgeschwindigkeit eines vorausfahrenden Segments oder einem Mittelwert von mehreren Winkelgeschwindigkeiten um die Hochachse vorausfahrender Segmente gebildet werden, wobei auch Gewichtungen der Werte möglich sind.

### Bezugszeichenliste für Fig. 3 und Fig. 4:

- 1: Regler mit Auswerte- und Leistungselektronik
- 1a: Sensor zur Erfassung der Drehgeschwindigkeit des Anhängers um die Hochachse
- 2: Aktor z.B. Elektrozylinder oder Schwenkantrieb mit Weg- oder Kraftmeßeinrichtung
- 3: Mittelstück
- 4: Stange
- 5: Bremsseilhalter
- 6: Verbindungsmittel zur Auflaufbremse z.B. Zugstange
- 7: Seilzug zur linken Anhängerbremse
- 8: Seilzug zur rechten Anhängerbremse
- 9: Hülle Bremsseil, links
- 10: Hülle Bremsseil, rechts
- 11: Halter, groß
- 12: Halter, klein
- 13: Achsmittelteil des Anhängers
- 14: Stecker Energieversorgung oder Informationsübertragung
- 14 a: Sensor zur Erfassung der Winkelgeschwindigkeit der Zugfahrzeugs um die Hochachse
- 15: Anschluß der Energieversorgung oder Informationsübertragung des vorausfahrenden Fahrzeugs mit Warneinrichtung
- 16: Fahrgeschwindigkeitsmesser z. B. Hallsensor

## Patentansprüche

1. Einrichtung zum Dämpfen von Schlingerbewegungen für mindestens ein von einem Zugfahrzeug gezogenes Anhängersegment, bei welcher Relativbewegungen, um einen Momentanpol in Gierrichtung erfaßt und daraus ein Signal für ein auf beiden Seiten unterschiedliches, zeitlich veränderliches Ansteuern der Radbremsen des Anhängers so abgeleitet wird, daß der Relativbewegung um den Momentanpol entgegengewirkt wird, wobei die Winkelgeschwindigkeit des Anhängers um den Momentanpol erfaßt wird, oder der Knickwinkel am Momentanpol erfaßt und differenziert wird, oder die Winkelbeschleunigung um den Momentanpol erfaßt und integriert wird und zur Ansteuerung der Radbremsen des Anhängers herangezogen wird,
**dadurch gekennzeichnet,**
**daß** die Differenz aus Sollwinkelgeschwindigkeit und Istwinkelgeschwindigkeit des Anhängersegmentes und die Phase der Bremsbetätigung an mindestens einem Anhängerrad der entsprechenden Seite, der Phase des Relativwinkels um den Momentanpol vorauseilt.

2. Einrichtung nach Anspruch 1, **dadurch gekennzeichnet, daß** das Regelverhalten der Fahrgeschwindigkeit angepaßt wird.

3. Einrichtung nach Anspruch 2, **dadurch gekennzeichnet, daß** die Ermittlung der Fahrgeschwindigkeit sensorisch (16) erfolgt.

4. Einrichtung nach Anspruch 2 oder 3, **dadurch gekennzeichnet, daß** die Einrichtung in Abhängigkeit der Fahrgeschwindigkeit ein- und ausgeschaltet wird.

5. Einrichtung nach Anspruch 2 oder 3, **dadurch gekennzeichnet, daß** die Einrichtung in Abhängigkeit der Fahrgeschwindigkeit stetig in und außer Betrieb genommen wird.

6. Einrichtung nach einem der vorhergehenden Ansprüche, **dadurch gekennzeichnet, daß** die Phase der Bremskraft am Anhängerrad der Phase des Relativwinkels um den Momentanpol um vorzugsweise etwa 90° vorauseilt.

7. Einrichtung nach einem der vorhergehenden Ansprüche, **dadurch gekennzeichnet, daß** eine Information über die Winkelgeschwindigkeit des Zugfahrzeuges um die Hochachse (Sensor 14a) zur Ermittlung einer Sollwinkelgeschwindigkeit am Momentanpol herangezogen wird.

8. Einrichtung nach Anspruch 7, **dadurch gekennzeichnet, daß** ein Sensor (14a) zur Erfassung der Winkelgeschwindigkeit des Zugfahrzeuges um die Hochachse an einem Stecker, der die Energieversorgung oder die Informationsübertragung zwischen Zugfahrzeug und Anhängers herstellt, befestigt ist.

9. Einrichtung nach Anspruch 7, **dadurch gekennzeichnet, daß** ein Sensor (14a) zur Erfassung der Information über die Winkelgeschwindigkeit des Zugfahrzeuges um die Hochachse am Zugfahrzeug selbst befestigt ist.

10. Einrichtung nach einem der Ansprüche 7 bis 9, **dadurch gekennzeichnet, daß** der Sensor (14a) zur Erfassung der Winkelgeschwindigkeit ein Schwinggabelsensor (14a) ist.

11. Einrichtung nach einem der Ansprüche 7 bis 10, **dadurch gekennzeichnet, daß** mehrere Anhänger hintereinander gekoppelt sind, wobei sowohl das Zugfahrzeug als auch jeder der Anhänger oder jedes der Anhängersegmente einen Sensor (1a) zur Erfassung der Information der Winkelgeschwindigkeit aufweist.

12. Einrichtung nach einem der vorhergehenden Ansprüche, **dadurch gekennzeichnet, daß** eine Information über die durch eine die Bremsen ansteuernde Aktorik (2) hervorgerufene Bremskraft, direkt oder indirekt ermittelt und an einen Regler zurückgemeldet wird.

13. Einrichtung nach einem der vorhergehenden Ansprüche, **dadurch gekennzeichnet, daß** der Regler an den Fahrer ein Signal sendet, welches diesen, über den Betriebszustand des Reglers informiert.

14. Einrichtung nach Anspruch 13, **dadurch gekennzeichnet, daß** der Regler an den Fahrer ein Signal sendet, wenn die Aktorik eingreift.

15. Einrichtung nach Anspruch 13 oder 14, **dadurch gekennzeichnet, daß** der Regler an den Fahrer ein Signal sendet, wenn der Anhänger im Grenzbereich bewegt wird und eine Verringerung der Geschwindigkeit angezeigt ist.

16. Einrichtung nach einem der vorhergehenden Ansprüche, **dadurch gekennzeichnet, daß** die Einrichtung die Anhängerbremsen über ein vorhandenes Steuergerät (z.B. Antiblockierregelgerät) beaufschlagt.

17. Einrichtung nach einem der vorhergehenden Ansprüche, **dadurch gekennzeichnet, daß** die Bremskraft an den Rädern elektrisch, elektromechanisch, rheoelektrisch, pneumatisch oder hydraulisch erzeugt wird.

18. Einrichtung nach einem der vorhergehenden Ansprüche, **dadurch gekennzeichnet, daß** der die Relativbewegungen um den Momentanpol erfassende Sensor (1a) auf dem Anhänger angebracht ist.

19. Einrichtung nach einem der vorhergehenden Ansprüche, **dadurch gekennzeichnet, daß** der die Relativbewegungen um den Momentanpol erfassende Sensor (1a) in oder in der Nähe der Aktorik auf dem Anhänger angebracht ist.

20. Einrichtung nach einem der vorhergehenden Ansprüche, **dadurch gekennzeichnet, daß** der die Relativbewegungen um den Momentanpol erfassende Sensor (1a) in Schwerpunktnähe auf dem Anhänger angebracht ist.

21. Einrichtung nach einem der Ansprüche 1 bis 18, **dadurch gekennzeichnet, daß** der die Relativbewegungen um den Momentanpol erfassende Sensor (1a) ein Winkelsensor ist, welcher an oder in der Nähe der Anhängerkupplung am Anhänger angebracht ist.

22. Einrichtung nach Anspruch 1 oder 7, oder 8, oder 10 oder 11 **dadurch gekennzeichnet, daß** zur Verbesserung der Informationsverarbeitung eine Filterung der Information erfolgt.

23. Einrichtung nach einem der vorhergehenden Ansprüche, **dadurch gekennzeichnet, daß** bei intermittierender Ansteuerung der Bremsen der Effektivwert oder das Pulsweitenverhältnis oder die Frequenz zur Regelung herangezogen wird.

## Claims

1. A device for the damping of sway movements, for at least one trailer segment drawn by a traction unit, for which the relative movement around an instantaneous pole in the yaw direction is measured and from this a signal for time dependent control of the trailer brakes is derived, which is different for each side of the trailer, and is carried out so as to counter relative movements of the trailer around the instantaneous pole, whereby the angular velocity of the trailer around the instantaneous pole is measured, or the curve angle at the pole position is measured and differentiated, or the angular acceleration around the pole position is measured and integrated, for the purpose of controlling the trailer brakes, **characterized by** the fact that the difference between the required and actual angular velocities of the trailer segment and the phase of the brake actuation leads the phase of the relative angle about the instantaneous pole, of at least one wheel on the corresponding side of the trailer segment.

2. A device as claimed in claim 1, **characterized by** the control characteristic being adjusted to the driving speed.

3. A device as claimed in claim 2, **characterized by** determination of the driving speed (16) using a sensor.

4. A device as claimed in claims 2 or 3, **characterized by** the device being switched on and off dependent on the driving speed.

5. A device as claimed in claims 2 or 3, **characterized by** the device being continuously taken in and out of operation dependent on the driving speed.

6. A device according to one of the previous claims, **characterized by** the phase of the braking force at the trailer wheel leading the phase of the relative angle about the instantaneous pole, preferably by approximately 90 degrees.

7. A device according to one of the preceding claims, **characterized by** information about the angular velocity of the traction unit around the normal axis being used for determining the required angular velocity (Sensor 14a) at the instantaneous pole.

8. A device according to claim 7, **characterized by** a sensor (14a) for measurement of the angular velocity of the traction unit around the normal axis being mounted on a connector for transmitting energy or information between the traction unit and the trailers.

9. A device according to claim 7, **characterized by** a sensor (14a) for measurement of the angular velocity of the traction unit around the normal axis being mounted on the traction unit itself.

10. A device according to one of the claims 7 through 9, **characterized by** the sensor (14a) for measurement of the angular velocity being a swinging-fork sensor (14a).

11. A device according to one of the claims 7 through 10, **characterized by** several trailers being coupled together, one behind the other, whereby both the traction unit and everyone of the trailers or everyone of the trailer segments has a sensor (1a) for information about the angular velocity.

12. A device according to one of the preceding claims, **characterized by** information about the braking force caused by the actuator controlling the brakes (2) being determined directly or indirectly and reported back to a controller.

13. A device according to one of the preceding claims, **characterized by** a controller which transmits the operating state of the controller to the driver.

14. A device according to claim 13, **characterized by** the controller sending a signal to the driver if the actuator intervenes.

15. A device according to claim 13 or 14, **characterized by** the controller sending a signal to the driver if the trailer reaches the border zone and a decrease in speed is indicated.

16. A device according to one of the preceding claims, **characterized by** the device initiating actuation of the trailer brakes through an existing controller (for example, an antilock breaking control system).

17. A device according to one of the preceding claims, **characterized by** the braking force on the wheels being generated electrically, electromechanically, rheoelectrically, pneumatically or hydraulically.

18. A device according to one of the preceding claims, **characterized by** the sensor for measuring the relative movement around the instantaneous pole (1a) being attached to the trailer.

19. A device according to one of the preceding claims, **characterized by** the sensor for measuring the relative movement around the instantaneous pole (1a) being located on the trailer at or near the actuator.

20. A device according to one of the preceding claims, **characterized by** the sensor for measuring the relative movement around the instantaneous pole (1a) being located at on in proximity to the centre of gravity of the trailer.

21. A device according to one of claims 1 through 18, **characterized by** the sensor for measuring the relative movement around the instantaneous pole (1a) being an angular sensor located at or near the trailer coupling.

22. A device according to claim 1 or 7 or 8 or 10 or 11, **characterized by** filtering being used to improve information processing.

23. A device according to one of the preceding claims, **characterized by** the effective value or the pulsewidth ratio or the frequency being utilized for regulation during intermittent excitation of the brakes.

## Revendications

1. Dispositif d'amortissement de mouvements de roulis pour au moins un segment de remorque tirée par un véhicule tracteur pour lequel il enregistre des mouvements relatifs en direction du lacet autour d'un centre instantané de rotation ; ainsi, un signal pour une commande différente variable dans le temps des deux côtés du frein de roue de la remorque est dévié de telle sorte que le mouvement relatif autour du centre instantané de rotation est contré, pendant que la vitesse angulaire de la remorque est captée autour du centre instantané de rotation, ou que l'angle de flambage est capté au centre instantané de rotation et différencié, ou que l'accélération angulaire autour du centre instantané de rotation est enregistrée et intégrée, et sollicitée pour la commande des freins de roue de la remorque,
**caractérisé par le fait que**
la différence entre la vitesse angulaire de consigne et la vitesse angulaire effective du segment de remorque et la phase d'actionnement des freins est devancée, au moins sur l'une des roues de remorque, du côté correspondant autour du centre instantané de rotation.

2. Dispositif selon la revendication 1, **caractérisé par le fait que** le mode de régulation est adapté à la vitesse de marche .

3. Dispositif selon la revendication 2, **caractérisé par le fait que** la détermination de la vitesse de marche s'effectue de manière sensorielle (16).

4. Dispositif selon la revendication 2, ou 3, **caractérisé par le fait que** le dispositif s'allume et s'éteint en fonction de la vitesse de marche.

5. Dispositif selon la revendication 2, ou 3, **caractérisé par le fait que** le dispositif est mis en service et hors service en permanence en fonction de la vitesse de marche.

6. Dispositif selon l'une des revendications précédentes, **caractérisé par le fait que** la phase de la force de freinage sur la roue de remorque avance à la phase de l'angle relatif autour du centre instantané de rotation préférablement d'environ 90°.

7. Dispositif selon l'une des revendications précédentes, **caractérisé par le fait qu'**une information sur la vitesse angulaire du véhicule tracteur autour de l'axe vertical (capteur 14a) intervient pour la détermination d'une vitesse de consigne sur le centre instantané de rotation.

8. Dispositif selon la revendication 7, **caractérisé par le fait qu'**un capteur (14a) est fixé pour l'enregistrement de la vitesse angulaire du véhicule tracteur autour de l'axe vertical à une prise, qui établit l'alimentation en énergie ou la transmission d'informations entre le véhicule tracteur et la remorque.

9. Dispositif selon la revendication 7, **caractérisé par le fait qu'**un capteur (14a) est fixé pour l'enregistrement de l'information sur la vitesse angulaire du véhicule tracteur autour de l'axe vertical, sur le véhicule tracteur lui-même.

10. Dispositif selon l'une des revendications 7 à 9, **caractérisé par le fait que** le le capteur (14a) pour l'enregistrement de la vitesse angulaire est un capteur de fourche oscillante (14a).

11. Dispositif selon l'une des revendications 7 à 10, **caractérisé par le fait que** plusieurs remorques sont accrochées l'une derrière l'autre ; pour cela, aussi bien le véhicule tracteur que chaque remorque ou chacun des segments de remorque dispose d'un capteur (1a) pour l'enregistrement de l'information de la vitesse angulaire.

12. Dispositif selon l'une des revendications précédentes, **caractérisé par le fait qu'**une information sur une force de freinage suscitée par le système d'acteurs (2) actionnant les freins, déterminé directement ou indirectement, est signalée en retour à un dispositif de régulation.

13. Dispositif selon l'une des revendications précédentes, **caractérisé par le fait que** le dispositif de régulation envoie un signal au conducteur, l'informant de l'état de fonctionnement du dispositif de régulation.

14. Dispositif selon la revendication 13, **caractérisé par le fait que** le dispositif de régulation envoie un signal au conducteur indiquant l'intervention du système d'acteurs.

15. Dispositif selon la revendication 13, ou 14, **caractérisé par le fait que** le dispositif de régulation envoie un signal au conducteur lorsque la remorque est actionnée dans les limites et qu'une diminution de la vitesse est préconisée.

16. Dispositif selon l'une des revendications précédentes, **caractérisé par le fait que** le dispositif amorce les freins de remorque par une unité de contrôle présente (par ex. dispositif de régulation d'antiblocage).

17. Dispositif selon l'une des revendications précédentes, **caractérisé par le fait que** la force de freinage s'exerce au niveau des roues de façon électrique, électromécanique, rhéoélectrique, pneumatique ou hydraulique.

18. Dispositif selon l'une des revendications précédentes, **caractérisé par le fait que** le capteur (1a) enregistrant les mouvements relatifs autour du centre instantané de rotation est placé sur la remorque.

19. Dispositif selon l'une des revendications précédentes, **caractérisé par le fait que** le capteur (1a) enregistrant les mouvements relatifs autour du centre instantané de rotation est placé dans la zone du système d'acteurs ou à proximité de celui-ci sur la remorque.

20. Dispositif selon l'une des revendications précédentes, **caractérisé par le fait que** le capteur (1a) enregistrant les mouvements relatifs autour du centre instantané de rotation est placé à proximité du centre de gravité sur la remorque.

21. Dispositif selon l'une des revendications 1 à 18, **caractérisé par le fait que** que le capteur (1a) enregistrant les mouvements relatifs autour du centre instantané de rotation est un capteur angulaire, qui est placé sur le dispositif d'attelage de la remorque, ou à proximité, sur la remorque.

22. Dispositif selon la revendication 1 ou 7, ou 8, ou 10 ou 11 **caractérisé par le fait qu'**un un filtrage de l'information est mis en oeuvre, pour l'amélioration du traitement de l'information.

23. Dispositif selon l'une des revendications précédentes, **caractérisé par le fait que** pour une commande intermittente des freins, la valeur effective ou le rapport de longueur d'impulsions
ou la fréquence intervient dans le réglage.
